# EUROPÄISCHE PATENTSCHRIFT

(11) **EP 3 336 131 B1**
(45) Veröffentlichungstag und Bekanntmachung des Hinweises auf die Patenterteilung: **03.08.2022**
(21) Anmeldenummer: 17204841.5
(22) Anmeldetag: 01.12.2017
(51) Int. Cl.: C08G 69/26

(54) **TRANSPARENTE POLYAMID-FORMMASSEN MIT HOHER BRUCHDEHNUNG**
TRANSPARENT POLYAMIDE MOULDING COMPOSITIONS HAVING HIGH ELONGATION
MATIÈRES MOULABLES EN POLYAMIDE TRANSPARENT PRÉSENTANT UN ALLONGEMENT À LA RUPTURE ÉLEVÉ

(30) Priorität: 16.12.2016 EP 16204566
(43) Veröffentlichungstag der Anmeldung: 20.06.2018
(73) Patentinhaber: EMS-CHEMIE AG, 7013 Domat/Ems (CH)
(72) Erfinder: WIEDEMANN, Thomas, 7013 Domat/Ems (CH); HEWEL, Dr. Manfred, 7013 Domat/Ems (CH)
(74) Vertreter: Bremi, Tobias Hans

(56) Entgegenhaltungen:
- EP-A1- 1 826 229
- EP-A2- 0 041 130
- US-A1- 2013 317 168

## Beschreibung

### TECHNISCHES GEBIET

Die vorliegende Erfindung betrifft transparente Polyamid-Formmassen, wie sie beispielsweise als Gehäusebestandteile, im Haushaltsbereich, Sportartikelbereich oder Spielzeugbereich eingesetzt werden können, und welche besondere mechanische Eigenschaften aufweisen.

### STAND DER TECHNIK

Transparente thermoplastische Werkstoffe finden in einer Vielzahl von Gebieten Anwendung, insbesondere im Bereich von Gehäusen, optischen Geräten, Displays aber auch im Bereich von Haushaltsgeräten, Sport- und Spielartikeln. Dabei ist es wichtig, dass die Formmassen gut verarbeitet werden können, um unterschiedlichste Formgebungen zu ermöglichen, und es ist wichtig, dass die Transparenz auch über einen längeren Benützungszeitraum, gegebenenfalls auch nach intensiver Sonneneinstrahlung oder Chemikalienexposition, erhalten bleibt. Ebenfalls wichtig sind die mechanischen Eigenschaften, unter anderem auch das Verhalten beim Bruch.

EP-A-0 885 930 beschreibt eine Möglichkeit die Schlagzähigkeit von transparenten Polyamiden auf Basis von cycloaliphatischen Diaminen mit Tg > 160°C zu verbessern, indem diesen eher spröden transparenten Polyamiden zähere Polyamide des Typs 6T/12 oder 6T/6I/12 zugemischt werden (Blend). Dabei wird zwar in einigen Fällen die Schlagzähigkeit verbessert ohne die Steifigkeit des transparenten Polyamides allzu stark zu reduzieren, allerdings wird dabei die Reissdehnung nicht oder nur unwesentlich verbessert. Werden aliphatische Polyamide oder olefinische Schlagzähmodifikatoren zulegiert, resultiert eine drastische Reduktion des Zug-E-Moduls, die Bruchdehnung bleibt aber weiterhin wesentlich unter 100%.

EP-A-1 930 373 betrifft transparente Formkörper aus Polyamidformmassen, die eine geringe Neigung zur Ausbildung von mechanischen Spannungsrissen bei dynamischer Belastung zeigen. Die eingesetzten Polyamide sind dabei aus mindestens einem Diamin ausgewählt aus der Gruppe aus Hexamethylendiamin, Bis-(4-amino-3-methylcyclohexyl)methan und/oder Bis-(4-aminocyclohexyl)methan sowie aus mindestens einer Dicarbonsäure ausgewählt aus der Gruppe aus Isophthalsäure (IPS), Terephthalsäure (TPS) und/oder Dodecandisäure (DDS) oder aus den vorstehend genannten Diaminen und Dicarbonsäuren in Kombination mit Lactamen und/oder α,ω-Aminosäuren gebildet. Die bevorzugten Varianten, die entweder zu 100% auf dem Diamin 1,6-Hexandiamin oder auf einer Mischung von 1,6-Hexandiamin, MACM und PACM beruhen, sind zwar aufgrund ihres hohen Zug-E-Moduls ausreichend steife Produkte, die Bruchdehnung ist jedoch für viele Anwendungen zu gering.

In WO-A-2007/087896 werden transparente Polyamide beschrieben, welche zum Herstellen von heissdampf-sterilisierbaren, transparenten Formteilen und Extrudaten sowie diesen in ihrer Zusammensetzung entsprechenden, heissdampf-sterilisierbaren und transparenten Normprüfkörpern (ISO-Prüfkörpern) verwendet werden können, wobei die Normprüfkörper mindestens 100 Heissdampf-Sterilisationszyklen (134 °C / 7 Minuten) überstehen, ohne dass die Reissdehnung unter die Streckdehnung fällt und ohne dass sichtbare Beschädigungen oder Deformationen auftreten. Diese Polyamide basieren im Wesentlichen auf den Diaminen MACM und PACM, den Dicarbonsäuren IPS und TPS und zwingend Lactam-12, besitzen eine hohe Steifigkeit, aber nur eine geringe Bruchdehnung.

US-B-4207411 betrifft amorphe transparente Polyamide auf Basis von ausschliesslich aromatischen Dicarbonsäuren und mindestens zwei verschiedenen Diaminen, einem langkettigen aliphatischen Diamin und einem cycloaliphatischen Diamin. Verglichen werden die erfindungsgemässen Zusammensetzungen enthaltend im Wesentlichen das langkettige Diamin 5-Methyl-1,9-nonandiamin und Vergleichsbeispiele mit dem kurzkettigen Diamin 1,6-Hexandiamin. Als Ergebnis wird festgehalten, dass die Zusammensetzungen mit langkettigem Diamin deutlich duktiler sind, die Reissdehnung ist um den Faktor 2 - 3 höher, als die Polyamide enthaltend 1,6-Hexandiamin.

EP-A-1 826 229 beschreibt amorphe transparente Polyamide auf Basis von PACM und Terephthalsäure, wobei der Anteil an cycloaliphatischen Diamin-Bausteinen stets mindestens 50 mol-% innerhalb der Diamin-Fraktion ausmacht.

EP-A-0 041 130 beschreibt transparente thermoplastische Polyamide auf Basis von cycloaliphatischen Diamin-Bausteinen und aromatischen Dicarboxylsäuren-Bausteinen.

### DARSTELLUNG DER ERFINDUNG

Es ist entsprechend Aufgabe der vorliegenden Erfindung, transparente Polyamid-Formmassen zur Verfügung zu stellen, welche gut verarbeitet werden können, und gute mechanische Eigenschaften besitzen, welche insbesondere bei hoher Transparenz und niedrigem Haze die Kombination eines hohen Zug-E-Moduls mit einer hohen Reissdehnung (Bruchdehnung) bereitstellen. Insbesondere im Hinblick auf den Kugelschusstest sollen verbesserte thermoplastische transparente Polyamid-Formmassen bereitgestellt werden.

Die Begriffe der Transparenz und des Haze sind im Rahmen der vorliegenden Erfindung wie folgt zu verstehen: Die Transparenz einer aus der transparenten Formmasse hergestellten Platte mit Dicke von 2mm, gemessen als Lichttransmission gemäss ASTM D1003, beträgt über 85%, bevorzugt über 88 %, insbesondere bevorzugt mindestens 90% und der Haze (Trübung) maximal 5%, bevorzugt höchstens 3 %, insbesondere bevorzugt maximal 2%. Für die angestrebte Verwendung der erfindungsgemässen Formmassen werden Steifigkeiten (Zug-E-Modul grösser 1800 MPa, vorzugsweise grösser 2000 MPa) und hohe Zähigkeiten (bevorzugtermassen Schlagzähigkeit bei 23°C: ohne Bruch) erzielt. Weiterhin wird eine gute Reissfestigkeit und eine hohe Reissdehnung, Letztere vorzugsweise im Bereich von 100 %, erreicht. Darüber hinaus brechen Formteile aus den erfindungsgemässen Formmassen duktil. Beim Kugelschusstest treten keine Brüche auf. Die vorliegende Erfindung betrifft entsprechend gemäss einem ersten Aspekt eine Polyamidformmasse bestehend aus den folgenden Bestandteilen:
(A) 50 - 100 Gew.-% mindestens eines transparenten Polyamids gebildet aus:
   (a1) 55 bis 77 mol-% acyclisches, aliphatisches Diamin mit 5 bis 10 Kohlenstoffatomen;
   (a2) 23 bis 45 mol-% cycloaliphatisches Diamin mit 6 bis 36 C-Atomen wobei die Anteile von (a1) und (a2) bezogen sind auf die Summe der eingesetzten Diamine und in der Summe 100 mol-% ausmachen;
   (a3) 40 bis 80 mol-% aromatische Dicarbonsäure oder eine Mischung solcher Dicarbonsäuren;
   (a4) 20 bis 60 mol-% acyclische, aliphatische Dicarbonsäure mit 8 bis 16 Kohlenstoffatomen oder eine Mischung solcher Dicarbonsäuren;
   wobei die Anteile von (a3) und (a4) bezogen sind auf die Summe der eingesetzten Dicarbonsäuren und in der Summe 100 mol-% ausmachen, wobei das transparente Polyamid frei von Lactamen oder den entsprechenden Aminocarbonsäuren ist;
(B) 0 - 50 Gew.-% Additive;
wobei die Summe der Komponenten (A) und (B) 100 Gew.-% ausmacht.

Es zeigt sich, dass genau die gleichzeitige Anwesenheit aller vier Bausteine (a1)-(a4), d. h. auf Seiten der Diamine sowohl eines aliphatischen Diamins als auch eines cycloaliphatischen Diamins, und auf Seiten der Dicarboxylsäuren sowohl wenigstens einer aromatischen Dicarbonsäure als auch einer aliphatischen Dicarbonsäure mit einer vergleichsweise grossen Kettenlänge, unerwarteter Weise diese besondere Eigenschaftenkombination zur Verfügung stellt. Dies aber nur, wenn die einzelnen Bausteine auch in den anspruchsgemässen Proportionen und nicht in Form einer Mischung aus verschiedenen Polyamiden, sondern als Copolymerisat, vorgelegt werden. Namentlich kann eben genau unerwarteter Weise durch diese spezifische Kombination erreicht werden, dass bei hervorragenden optischen Eigenschaften (Transparenz, Haze) besonders gute mechanische Eigenschaften, insbesondere ein grosser Zug-E-Modul bei sehr hoher Bruchdehnung, vorliegt. Zudem zeigt sich unerwarteter Weise, dass beim Kugelschusstest kein Bruch eintritt und demnach keine Fragmente aus der Platte herausgerissen werden. Die Besonderheit dieser transparenten Polyamide liegt also darin, dass die beiden Eigenschaften hohe Steifigkeit und hohe Duktilität unerwarteter Weise kombiniert werden konnten. Dabei wird die hohe Steifigkeit einem Zug-E-Modul von wenigstens 2000 MPa, bevorzugt 2100 MPa gleichgesetzt und die Duktilität wird mit einer Reissdehnung von wenigstens 100%, bevorzugt wenigstens 120% definiert. Beide Eigenschaften werden gemäss ISO 527 (ISO 527-1:2012 und 527-2:2012) bestimmt. Gleichzeitig erfüllen diese Polyamide hohe Anforderungen hinsichtlich Transparenz (> 90%) und Haze (< 3%), jeweils bestimmt nach ASTM D1003 an Rundplatten der Dimension 70x2 mm oder Platten der Dimension 60x60x2 mm. Zusätzlich weisen die erfindungsgemässen Formmassen eine geringe Vergilbung auf und zwar nicht nur direkt nach der Herstellung, sondern auch nach Lagerung bei erhöhter Temperatur und bei schlagartiger Beanspruchung wie im Kugelschusstest zeigen sie eine unerwartet niedrige Bruchneigung.

Die erfindungsgemässen Polyamide beruhen auf einer Kombination von mindestens zwei Diaminen mit mindestens zwei Dicarbonsäuren und sind frei an Lactamen oder den entsprechenden Aminocarbonsäuren.

Gemäss einer ersten bevorzugten Ausführungsform ist eine solche Polyamidformmasse dadurch gekennzeichnet, dass es sich beim Ausgangsstoff (a1) um ein lineares oder verzweigtes Diamin mit 6-10 Kohlenstoffatomen handelt.

Vorzugsweise handelt es sich beim Ausgangsstoff (a1) um ein lineares Diamin mit 6-8 Kohlenstoffatomen. Insbesondere bevorzugt ist (a1) ausschliesslich gebildet durch 1,6-Hexamethylendiamin und/oder 2-Methyl-1,5-Pentandiamin.

Gemäss einer weiteren bevorzugten Ausführungsform handelt es sich beim Ausgangsstoff (a2), der auch ein Diamin ist wie (a1) aber ansonsten strukturell verschieden ist von (a1), um ein cycloaliphatisches Diamin mit 6-20 Kohlenstoffatomen. Insbesondere ist dieses bevorzugt ausgewählt aus der Gruppe bestehend aus: Bis-(4-amino-3-methyl-cyclohexyl)-methan (MACM), Bis-(4-amino-cyclohexyl)-methan (PACM), 2,2-Bis-(4-amino-cyclohexyl)-propan, 2,2-Bis-(4-amino-3-methyl-cyclohexyl)-propan, Bis-(4-Amino-3-ethyl-cyclohexyl)-methan (EACM), Bis-(4-Amino-3,5-dimethy-cyclohexyl)-methan (TMACM), Isophorondiamin (5-Amino-1,3,3-trimethyl-cyclohexanmethanamin), 1,3-Diaminocyclohexan, 1,3-Diaminomethylcyclohexan, 2,5-Bis-(aminomethyl)-norbornan, 2,6-Bis-(aminomethyl)-norbornan, 2,5-Diaminonorbornan, 2,6-Diaminonorbornan, oder Mischungen davon. Insbesondere bevorzugt sind cycloaliphatische Diamine mit 12-20 Kohlenstoffatomen, bevorzugt ausgewählt aus der Gruppe bestehend aus: Bis-(4-amino-3-methyl-cyclohexyl)-methan (MACM), 2,2-Bis-(4-amino-3-methyl-cyclohexyl)-propan (MACP), Bis-(4-amino-cyclohexyl)-methan (PACM), 2,2-Bis-(4-amino-cyclohexyl)-propan (PACP), Bis-(4-amino-3-ethyl-cyclohexyl)-methan (EACM), 2,2-Bis-(4-amino-3-ethyl-cyclohexyl)-propan (EACP), Bis-(4-amino-3,5-dimethy-cyclohexyl)-methan (TMACM), 2,2-Bis-(4-amino-3,5-dimethy-cyclohexyl)-propan (TMACP).

Der in dieser Anmeldung verwendete Ausdruck PACM steht somit für die ISO-Bezeichnung Bis-(4-amino-cyclohexyl)-methan, welches unter dem Handelsnamen 4,4'-Diaminodicyclohexylmethan als Dicykan-Typ (CAS Nr. 1761-71-3) kommerziell erhältlich ist. Der Ausdruck MACM steht für die ISO-Bezeichnung Bis-(4-amino-3-methyl-cyclohexyl)-methan, welches unter dem Handelsnamen 3,3'-Dimethyl-4,4'-diaminodicyclohexylmethan als Laromin C260-Typ (CAS Nr. 6864-37-5) kommerziell erhältlich ist.

Ganz besonders bevorzugt handelt es sich beim Ausgangsstoff (a2) um ein cycloaliphatisches Diamin ausgewählt aus der Gruppe bestehend aus: Bis-(4-amino-3-methyl-cyclohexyl)-methan (MACM), Bis-(4-amino-cyclohexyl)-methan (PACM), oder Mischungen davon. Besonders bevorzugt ist die ausschliessliche Verwendung von MACM.

Was die Proportionen der Diamine angeht, so liegt bevorzugtermassen der Anteil an (a1) im Bereich von 58-75 mol-%, vorzugsweise im Bereich von 60-72 mol-%, insbesondere vorzugsweise im Bereich von 63-72 mol-%.

Der Anteil an (a2) liegt bevorzugtermassen im Bereich von 25-42 mol-%, vorzugsweise im Bereich von 28-40 mol-%, insbesondere vorzugsweise im Bereich von 28-37 mol%. Dabei gilt natürlich immer, dass die Anteile von (a1) und (a2) bezogen sind auf die Summe der eingesetzten Diamine und in der Summe 100 mol-% ausmachen.

Beim Ausgangsstoff (a3) handelt es sich bevorzugt um eine aromatische Dicarbonsäure mit 6-36 Kohlenstoffatomen. Vorzugsweise ist (a3) ausgewählt aus der Gruppe bestehend aus: Terephthalsäure (TPS), verschiedene Naphthalindicarbonsäuren (NDA), insbesondere 1,5-Naphthalindicarbonsäure und 2,6-Naphthalindicarbonsäure, Isophthalsäure (IPS), verschiedene Biphenyl-dicarbonsäuren, wie z.B. Diphensäure (Biphenyl-2,2'-dicarbonsäure), 4,4'-Diphenyldicarbonsäure, 3,3'-Diphenyldicarbonsäure, 4,4'-Diphenyletherdicarbonsäure, 4,4'-Diphenylmethandicarbonsäure und 4,4'-Diphenylsulfondicarbonsäure, 1,5-Anthracendicarbonsäure, p-Terphenylen-4,4"-dicarbonsäure und 2,5-Pyridindicarbonsäure oder Mischungen davon.

Insbesondere bevorzugtermassen wird die Komponente (a3) ausgewählt aus der Gruppe bestehend aus Terephthalsäure und Isophthalsäure oder Mischungen davon.

Wenn als aromatische Dicarbonsäure der Komponente (a3) eine Mischung aus Terephthalsäure und Isophthalsäure eingesetzt wird, so liegen diese beiden Systeme Terephthalsäure: Isophthalsäure vorzugsweise innerhalb der Komponente (a3) in einem molaren Verhältnis von 2:1-1:2, insbesondere in einem Verhältnis von 1.5:1-1:1.5 vor. Ganz besonders bevorzugt wird eine äquimolare Mischung aus Terephthalsäure und Isophthalsäure eingesetzt.

Beim Ausgangsstoff (a4) handelt es sich gemäss einer weiteren bevorzugten Ausführungsform um eine lineare oder verzweigte aliphatische Dicarbonsäure mit 10-14 Kohlenstoffatomen oder eine Mischung solcher Dicarbonsäuren.

Vorzugsweise handelt es sich bei (a4) um eine lineare aliphatische Dicarbonsäure ausgewählt aus der folgenden Gruppe: Decandisäure, Undecandisäure, Dodecandisäure, Tridecandisäure, Tetradecandisäure, Hexadecandisäure, oder eine Mischung davon. Besonders bevorzugt wird als Ausgangsstoff (a4) ausschliesslich Dodecandisäure eingesetzt.

Was die Proportionen der Dicarbonsäure angeht, so liegt insbesondere bevorzugt der Anteil an (a3) im Bereich von 40 - 78 mol-% oder 50-77 mol-%, vorzugsweise im Bereich von 60-75 mol-% liegt.

Der Anteil an (a4) liegt bevorzugt im Bereich von 22-60 mol-% oder 23-50 mol-%, vorzugsweise im Bereich von 25-40 mol-%.

Dabei gilt stets, dass die Anteile von (a3) und (a4) bezogen sind auf die Summe der eingesetzten Dicarboxylsäuren und in der Summe 100 mol-% ausmachen.

Eine besonders bevorzugte Polyamidformmasse mit optimalen Eigenschaften ist dadurch gekennzeichnet, dass für den Aufbau von (A)
(a1) ausgewählt ist als 1,6-Hexamethylendiamin;
(a2) ausgewählt ist als MACM, PACM, oder eine Mischung davon, vorzugsweise als ausschliesslich MACM;
(a3) ausgewählt ist als Terephthalsäure, Isophthalsäure, oder eine Mischung davon, vorzugsweise eine Mischung in einem Verhältnis von 1.5:1-1:1.5, insbesondere vorzugsweise eine äquimolare Mischung;
(a4) ausgewählt ist als Dodecandisäure.

Dabei sind bevorzugtermassen die Anteile der Komponenten wie folgt ausgewählt: (a1) im Bereich von 60-75 mol-%; (a2) im Bereich von 25-40 mol-%; (a3) im Bereich von 60-75 mol-%; (a4) im Bereich von 25-40 mol-%; wobei die Anteile von (a1) und (a2) bezogen sind auf die Summe der eingesetzten Diamine und in der Summe 100 mol-% ausmachen und wobei die Anteile von (a3) und (a4) bezogen sind auf die Summe der eingesetzten Dicarboxylsäuren und in der Summe 100 mol-% ausmachen.

Wichtig ist dabei generell, dass im Rahmen von (A) keine Bausteine auf Lactam oder Aminosäuren-Basis eingesetzt sind. (A) ist also frei von Lactam und/oder Aminosäure-Bausteinen.

Der Gehalt der Formmasse an Komponente (A) ist bevorzugt im Bereich von 60 bis 99.9 Gew.-%, besonders bevorzugt im Bereich von 80 bis 99.5 Gew.-% und insbesondere bevorzugt in den Bereichen 90.0 bis 99.9 und 97.0 bis 99.5 Gew.%.

Weiterhin ist bevorzugt, wenn das transparente Polyamid (A) eine Lösungsviskosität (ηᵣₑₗ) bestimmt an Lösungen von 0.5 g Polymer in 100 ml m-Kresol gemäss ISO 307:2013-08 bei 20°C zwischen 1.5 und 1.9, besonders bevorzugt zwischen 1.60 und 1.80 und ganz besonders bevorzugt zwischen 1.65 und 1.75 aufweist.

Bevorzugtermassen weisen die Polyamide (A) eine Glasübergangstemperatur von wenigstens 100°C, bevorzugt von wenigstens 120 oder 130°C und besonders bevorzugt von wenigstens 140°C auf, dabei aber bevorzugt von nicht mehr als 220°C oder nicht mehr als 200°C, wobei die Glastemperatur mittels DSC gemäss ISO 11357-2:2013-05 mit einer Aufheizrate von 20 K/min bestimmt wird.

Die transparenten, amorphen Polyamide (A) haben keine messbare oder nur sehr geringe Schmelzwärmen (Schmelzenthalpie) von höchstens 4 J/g, bevorzugt von höchstens 2 J/g (bestimmt gemäss ISO 11357-3:2013-04 an Granulat, Differential Scanning Calorimetry (DSC) mit einer Aufheizrate von 20 °C/min).

Die erfindungsgemässen Polyamidformmassen können Additive (Komponente B) in einem Anteil von 0 - 50 Gew.-%, bevorzugt 0.1 - 40 Gew.-% und besonders bevorzugt 0.5 - 20 Gew.-% bezogen auf die Formmasse enthalten oder auch in den bevorzugtermassen geringen Anteilen von höchstens 10 Gew.-%, bevorzugtermassen von höchstens 5 Gew.-%, insbesondere bevorzugt von höchstens 3 Gew.-% aufweisen.

Bei den genannten Additiven kann es sich um UV-Stabilisatoren, Hitzestabilisatoren, Radikalfänger, Verarbeitungshilfsstoffe, Einschlussverhinderer, Gleitmittel, Entformungshilfsstoffe, wie z.B. Metallstearate oder -montanate (Metall = Magnesium, Calcium, Barium), Mineralöle oder Fettsäureamide, Weichmacher, funktionelle Additive zur Beeinflussung der optischen Eigenschaften, insbesondere des Brechungsindexes, Schlagzähmodifikatoren, Füll- und/oder Zuschlagsstoffe, optische Aufheller, Farbstoffe oder Mischungen davon, wobei die Füll- und/oder Zuschlagstoffe bevorzugtermassen nanoskalig und/oder ausgewählt sind aus folgender Gruppe: Glasfasern, Glaskugeln, Carbonfasern, Russ, Graphit, Flammschutzmittel, Mineral einschliesslich Titandioxid, Calciumcarbonat oder Bariumsulfat. Also können die Formmassen (als Komponente B) nanoskalige Füll- und/oder Funktionsstoffe, wie z. B. Schichtmineralien oder Metalloxide, die den Brechungsindex erhöhen, oder optische Aufheller oder Farbstoffe, wie z. B. photochrome Farbstoffe beinhalten.

Im Sinne der Erfindung können die Formmassen ausserdem dem Fachmann geläufige Füll- und/oder Zuschlagstoffe, beispielsweise Glasfasern, Glaskugeln, Carbonfasern, Russ, Graphit, Flammschutzmittel, Mineral wie zum Beispiel Titandioxid, Calciumcarbonat oder Bariumsulfat, oder beispielsweise Schlagzähmodifikatoren, wie funktionalisierte Polyolefine, enthalten.

Bevorzugte Schlagzähmodifikatoren stammen aus der Gruppe, ausgewählt aus säuremodifizierten Ethylen-α-Olefin-Copolymeren, Ethylen-Glycidylmethacrylsäure-Copolymeren und Methacrylat-Butadien-Styrol-Copolymeren.

Neben Glas- und Kohlenstofffasern können als Verstärkungsmittel besonders solche auf Basis von nachwachsenden Rohstoffen und Bioanteilen über 50% eingesetzt werden. Besonders bevorzugt werden Naturfasern, wie z. B. Cellulose-, Hanf-, Flachs-, Baumwoll-, Woll- oder Holzfasern eingesetzt.

Die Additive der Komponente (B) können aber auch von (A) verschiedene Polymere, insbesondere bevorzugt Polyamide, sein. Wenn als Additive der Komponente (B) Polyamide eingesetzt werden, so handelt es sich dabei vorzugsweise um ein aliphatisches Polyamid, insbesondere bevorzugt ausgewählt aus der folgenden Liste: PA46, PA410, PA56, PA510, PA6, PA66, PA68, PA69, PA610, PA1010, PA106, PA11 und PA12 sowie Mischungen davon. Bevorzugtermassen gibt es aber im Rahmen von Komponente (B) keine von (A) verschiedene Polymere.

Die Herstellung der Polymerkomponente (A) erfolgt bevorzugtermassen in an sich bekannten Druckgefässen. Zunächst wird beispielsweise eine Druckphase bei 250°C bis 320°C gefahren. Danach folgt beispielsweise die Entspannung bei 250°C bis 320°C. Die Entgasung wird beispielsweise bei 260°C bis 320°C durchgeführt. Anschliessend wird die Polyamidformmasse in Strangform ausgetragen, im Wasserbad auf zum Beispiel 5°C bis 80°C gekühlt und granuliert. Das Granulat wird typischerweise 12 Stunden bei 80°C auf einen Wassergehalt unter bevorzugtermassen 0,06% getrocknet. Während der Trocknung mit gleichzeitiger Umwälzung des Granulates können Additive wie Gleitmittel, Farbstoffe, Stabilisatoren oder andere auf das Granulat aufgetragen oder aufgesintert werden.

Für die Herstellung der Polyamide werden die Diamine und die Dicarbonsäuren in der Regel im Verhältnis von 1:1 eingesetzt, können aber aus Gründen der Regelung der Molmasse auch einen Überschuss der Diamine oder Dicarbonsäuren enthalten, wobei das Verhältnis 1:1.10 bis 1.10:1 aber bevorzugt nicht überschritten wird. Zusätzlich können zwecks Regelung auch monofunktionelle Diamine und Carbonsäuren zum Einsatz kommen. So kann z.B. zur Einstellung der gewünschten relativen Viskosität (Komponente (A)), gemessen in einer Lösung von 0,5 g Polymer in 100 ml m-Kresol bei 20°C, von bevorzugtermassen 1.40 bis 2.40, bevorzugt 1.5 bis 1.9 und insbesondere bevorzugt von 1.60 bis 1.80 entweder die Diamine oder die Dicarbonsäuren in geringem Überschuss von 0,01 bis 2 Mol-% eingesetzt werden. Bevorzugt wird die Regelung mit Monoamin oder Monocarbonsäuren, einschliesslich Benzoesäure und Stearinsäure, von 0,01 bis 2,0 Gew.-%, bevorzugt 0,05 bis 0,5 Gew.-%, bezogen auf die Summe der Monomere a1 bis a4. durchgeführt. Geeignete Regler sind Benzoesäure, Essigsäure, Propionsäure, Stearylamin oder deren Mischungen. Besonders bevorzugt sind Regler mit Amin- oder Carbonsäuregruppen, die zusätzlich Stabilisatorgruppen des Typs HALS oder des Typs tert-Butyl-Phenol enthalten, wie beispielsweise Triacetondiamin oder Isophthalsäure-Di-Triacetondiamin-Derivate.

Geeignete Katalysatoren zur Beschleunigung der Polykondensationsreaktion sind phosphorhaltige Säuren, wie beispielsweise H₃PO₂, H₃PO₃, H₃PO₄, deren Salze oder organischen Derivate, die gleichzeitig eine Reduzierung der Verfärbung während der Verarbeitung bewirken. Die Katalysatoren werden normalerweise im Bereich von 0,001 bis 0,5 Gew.-%, bevorzugt im Bereich von 0,005 bis 0,1 Gew.-% zugegeben. Geeignete Entschäumer zur Vermeidung der Schaumbildung während der Entgasung sind wässrige Emulsionen, die Silicone oder Siliconderivate im Bereich von 0,01 bis 1,0 Gew.%, bevorzugt im Bereich von 0,01 bis 0,10 bei 10%iger Emulsion enthalten. Bei der Herstellung der erfindungsgemässen Polyamide (A) wird insbesondere bevorzugt auf die Verwendung von silikonhaltigen Entschäumern verzichtet, ganz besonders bevorzugt wird kein Entschäumer eingesetzt.

Geeignete Hitze- oder UV-Stabilisatoren können bereits vor der Polykondensation dem Ansatz in Mengen von 0,01 bis 0,5 Gew.-% zugegeben werden. Bevorzugt werden hochschmelzende Typen eingesetzt. Besonders bevorzugt wird Irganox 1098 verwendet. Die Ausrüstung der erfindungsgemässen, transparenten Formmassen mit Additiven wie beispielsweise Stabilisatoren, Gleitmittel wie beispielsweise Paraffinöle oder Stearate, Farbstoffe, Füllstoffe, Schlagzähmodifikatoren wie beispielsweise Terpolymere aus Ethylen-Glycidyl-Methacrylat, bevorzugt mit einem Brechungsindex im Bereich der erfindungsgemässen Formmassen oder Maleinsäureanhydrid gepfropfte Polyethylene, Propylene oder Verstärkungsstoffe wie beispielsweise transparent dispergierbare Nano-Partikel oder Glaskugeln oder Glasfasern, oder Mischungen der Additive, kann durch bekannte Mischverfahren, insbesondere Extrusion auf Ein- oder Mehrwellenextrudern mit Massetemperaturen zwischen 250°C bis 350°C, erfolgen.

Die vorliegende Erfindung betrifft also zudem ein Verfahren zur Herstellung von solchen Polyamidformmassen, und die oben genannte Aufgabe wird weiterhin gelöst durch das beanspruchte Verfahren zur Herstellung solcher Polyamidformmassen. Dabei erfolgt bevorzugtermassen die Herstellung der Polymerkomponente (A) in Druckgefässen, mit einer Druckphase bei 250°C bis 320°C mit einer nachfolgenden Entspannung bei 250°C bis 320°C, mit einer nachfolgenden Entgasung bei 260°C bis 320°C sowie Austragen der Polyamidformmasse in Strangform, Abkühlen, Granulieren und Trocknen des Granulats, Compoundieren der Komponente (A), und gegebenenfalls (B) als Granulat und Formen in einem Extruder bei Massetemperaturen von 220°C bis 350°C zu einem Strang, Schneiden mit geeigneten Granulatoren zu Pellets.

Geeignete Verfahren zur Herstellung hochtransparenter Formteile aus den erfindungsgemässen, transparenten Polyamidformmassen sind Spritzgiessverfahren oder Spritzprägeverfahren bei typischerweise Massetemperaturen von 230°C bis 330°C, wobei das Werkzeug mit Temperaturen von bevorzugt 40°C bis 130°C, ganz bevorzugt 60 bis 120°C eingestellt wird und wobei gegebenenfalls das Werkzeug mit Temperaturen von bevorzugt 40°C bis 130°C nach dem Füllen der Kavität einen Prägedruck auf das heisse Formteil aufbringt. Besonders geeignete Verfahren zur Herstellung von fehlerfreien, spannungsarmen Oberflächen des Formteils aus den erfindungsgemässen, transparenten Polyamidformmassen, wie beispielsweise Linsen für Brillen oder hochwertige Gehäuseteile, ist ein Expansionsspritzprägeprozess, wobei Kavitäten mit Wandstärken von 1 bis 5 mm gefüllt werden und anschliessend die Werkzeugkavität bei permanenter Füllung auf höhere Wandstärken auseinander gefahren wird.

Geeignete Verfahren zur Herstellung von Folien, Rohren und Halbzeugen in Ein- oder Mehrschichtausführung aus den erfindungsgemässen, transparenten Polyamidformmassen sind Extrusionsverfahren auf Ein- oder Mehrwellenextrudern mit Massetemperaturen zwischen 250°C bis 350°C, wobei je nach Verträglichkeit der verschiedenen Schichten geeignete Haftvermittler in Form entsprechender Copolymere oder Blends eingesetzt werden können.

Formteile, die aus den erfindungsgemässen Polyamidformmassen aufgebaut sind, können miteinander nach üblichen Verfahren wie beispielsweise durch Ultraschallschweissen, Glühdrahtschweissen, Friktionsschweissen, Rotationsschweissen oder Laserschweissen durch Ausrüstung mit laseraktiven Farbstoffen mit Absorption im Bereich 800nm bis 2000nm, miteinander verbunden werden.

Geeignete Verfahren zur Herstellung von Hohlkörpern und Flaschen in Ein- oder Mehrschichtausführung aus den erfindungsgemässen, transparenten Polyamidformmassen sind Spritzblasverfahren, Spritzstreckblasverfahren und Extrusionsblasverfahren.

Die erfindungsgemässen Formmassen können auch zu Folien, wie z. B. Flachfolien, Blasfolien, Giessfolien, Mehrschichtfolien verarbeitet werden. Eine Weiterverarbeitung der Folien erfolgt bevorzugt durch Kaschieren, Hinterspritzen, Recken, Verstrecken, Bedrucken oder Färben.

Formteile können massegefärbt oder mittels sogenannter Tauchbäder nachträglich eingefärbt werden. Formteile werden gegebenenfalls durch Fräsen, Bohren, Schleifen, Lasermarkieren, -schneiden und/oder -schweissen bearbeitet.

Geeignete Verwendungen für Formteile, die aus den erfindungsgemässen, transparenten Polyamidformmassen aufgebaut sind, sind Gehäuse- oder Displayelemente oder Teilelemente einer Maschine, eines Automobils, eines Haushaltsgerätes, eines Spielzeugs, eines Sportartikels oder eines insbesondere tragbaren elektrischen oder elektronischen Geräts, wie insbesondere eines Mobiltelefons, Computers, Laptops, GPS-Geräts, MP3-Players, Kamera, optischen Geräts oder Kombinationen davon handelt, oder um ein Brillengestell, ein Brillenglas, eine Linse, ein Fernglas, Schaugläser für Heizungstechnik mit direktem Ölkontakt, Filtertassen für Trinkwasseraufbereitung, Babyflaschen, Flaschen für Carbonisierung, Essgeschirr, Durchflussmesser für Gase oder flüssige Medien, Uhrengehäuse, Gehäuse für Armbanduhren, Lampengehäuse und Reflektoren für Autolampen oder Elemente davon sowie Dekor- und Spielzeugteile.

Des Weiteren betrifft die vorliegende Erfindung also die beanspruchten Formteile aus derartigen Polyamidformmassen, die bevorzugtermassen dem oben angegebenen Verfahren hergestellt werden. Die oben genannte Aufgabe wird mit anderen Worten zudem gelöst durch derartige Formteile erhältlich aus den oben beschriebenen Polyamidformmassen, bevorzugtermassen hergestellt mittels Spritzgiessverfahren und/oder Spritzprägeverfahren bei Massetemperaturen von bevorzugt 230°C bis 320°C, wobei das Werkzeug mit Temperaturen von bevorzugt 40°C bis 130°C eingestellt wird und wobei gegebenenfalls das Werkzeug mit Temperaturen von bevorzugt 40°C bis 130°C, ganz bevorzugt 60 bis 120°C nach dem Füllen der Kavität einen Prägedruck auf das heisse Formteil aufbringt.

Die aus den erfindungsgemässen, unverstärkten Formmassen hergestellten Formteile zeigen Steifigkeiten mit Zug-E-Moduli von 1800 bis 3500 MPa, bevorzugt mit Zug-E-Moduli von 2000 bis 3000 MPa und besonders bevorzugt mit Zug-E-Moduli von 2100 bis 2600 MPa. Die Prüfkörper zur Messung der Schlagwerte nach Charpy blieben bei Raumtemperatur (23°C) und bevorzugtermassen auch bei -30°C ohne oder wenig Bruch. Ein solches Formteil ist bevorzugter Weise gekennzeichnet durch eine hohe Lichttransmission, gemessen nach ASTM D1003, bestimmt an Platten mit einer Dimension 2 × 60 × 60mm oder an Rundplatten der Dimension 2 × 70mm, bei einer Temperatur von 23°C, mit dem Messgerät Haze Gard Plus der Firma Byk Gardner mit der CIE Lichtart C, wobei die Lichttransmission wenigstens 85%, bevorzugt wenigstens 88% und besonders bevorzugt wenigstens 90% beträgt.

Weiterhin bevorzugtermassen ist ein solches Formteile gekennzeichnet durch eine geringe Trübung (Haze) gemessen nach ASTM D1003, einer aus der transparenten Polyamidformmasse hergestellten Platte mit einer Dicke von 2mm von höchstens 5%, bevorzugt von höchstens 3% und ganz besonders bevorzugt von höchstens 2%.

Ein solches Formteil ist weiterhin vorzugsweise durch eine Reissdehnung, gemessen nach ISO 527-1:20102; 527-2:2012 mit einer Zuggeschwindigkeit von 50 mm/min am ISO-Zugstab, Typ Al, 170 × 20/10 × 4mm, bei einer Temperatur von 23°C, von wenigstens 100 % gekennzeichnet, vorzugsweise von wenigstens 120 %, insbesondere vorzugsweise von wenigstens 130 %, vorzugsweise bei einem Zug-E-Modul gemessen nach ISO 527 mit einer Zuggeschwindigkeit von 1 mm/min am ISO-Zugstab, Typ Al, 170 × 20/10 × 4mm, bei einer Temperatur von 23°C, von mehr als 2000 MPa, vorzugsweise von mehr als 2100 MPa.

Weitere Ausführungsformen sind in den abhängigen Ansprüchen angegeben.

### BESCHREIBUNG BEVORZUGTER AUSFÜHRUNGSFORMEN

Bevorzugte Ausführungsformen der Erfindung werden im Folgenden anhand der Ausführungsbeispiele beschrieben, die lediglich zur Erläuterung dienen und nicht einschränkend auszulegen sind.

### Herstellung der Formmassen:

Beispiele B1, B2 und VB7: Die Herstellung der Polyamide B1, B2 und VB7 erfolgte in einem rührbaren Druckautoklaven, ausgestattet mit einem Vorlagegefäss und einem Reaktionsgefäss. Das Vorlagegefäss wurde
(a) für Beispiel B1 mit 17.518 kg Bis-(4-amino-3-methyl-cyclohexyl)-methan, 14.526 kg 1,6-Hexandiamin, 10.123 kg Terephthalsäure, 10.123 kg Isophthalsäure und 17.209 kg Dodecandisäure, 30 kg deionisiertem Wasser und 11 g hypophosphoriger Säure (50%ige Lösung) beschickt,
(b) für Beispiel B2 mit 12.871 kg Bis-(4-amino-3-methyl-cyclohexyl)-methan, 18.594 kg 1,6-Hexandiamin, 13.090 kg Terephthalsäure, 13.090 kg Isophthalsäure und 12.433 kg Dodecandisäure, 30 kg deionisiertem Wasser und 8 g hypophosphoriger Säure (50%ige Lösung) beschickt,
(c) für Vergleichsbeispiel VB7 mit 23.045 kg Bis-(4-amino-cyclohexyl)-methan, 12.895 kg 1,6-Hexandiamin, 29.065 kg Isophthalsäure und 10.073 kg Dodecandisäure, 30 kg deionisiertem Wasser und 8 g hypophosphoriger Säure (50%ige Lösung) beschickt,
und jeweils mit Stickstoff inertisiert. Unter Rühren wurde auf 180 bis 230°C unter dem sich einstellenden Druck aufgeheizt bis eine homogene Lösung entstanden war. Diese Lösung wurde durch ein Sieb in das Reaktionsgefäss überführt, dort auf eine Reaktionstemperatur von 270 bis 310°C bei einem Druck von maximal 30 bar aufgeheizt und für einen Zeitraum von 2 bis 4 Stunden unter diesen Bedingungen gerührt. In der nachfolgenden Entspannungsphase wurde der Druck innerhalb von 1 bis 2 Stunden auf atmosphärischen Druck reduziert und die Temperatur im Bereich von 270 bis 300°C gehalten. Nach Erreichen einer relativen Viskosität von 1.73 für Beispiel B1, von 1.70 für Beispiel B2 und von 1.53 für Vergleichsbeispiele VB7 wird die Polyamidformmasse in Strangform ausgetragen, im Wasserbad gekühlt und granuliert. Das Granulat wird 12h bei 80°C auf einen Wassergehalt unter 0,06% getrocknet.

Die weiteren Beispiele VB wurden nach dem gleichen Verfahren hergestellt, bei Verwendung der gleichen Ausgangsmaterial-Gesamtmasse sowie unter Verwendung von 30 kg deionisierten Wassers, aber unter Verwendung der Ausgangsmaterial-Proportionen wie sie in der unten stehenden Tabelle angegeben sind. Zur Beschleunigung der Polykondensation wurde den Ansätzen 0.01 Gew.-% (bezogen auf die Gesamtmasse der Ausgangsmaterialien inkl. Wasser) hypophosphorige Säure (50%ige Lösung) zugesetzt. Die Herstellung hochtransparenter Formteile bzw. Probekörper aus den erfindungsgemässen, transparenten Polyamidformmassen wurde auf einer Arburg 420C Allrounder 1000-250 Spritzgiessmaschine bei Massetemperaturen von 260°C bis 330°C durchgeführt, wobei das Werkzeug auf eine Temperatur im Bereich von 60 bis 120°C eingestellt wurde. Die Schneckendrehzahl betrug 150 bis 400 Upm.

Die entstandenen Materialien bzw. Formteile weisen die in Tabelle 1 und Tabelle 2 aufgeführten Zusammensetzungen und Eigenschaften auf.

**Tabelle 1:**

| | | **B1** | **B2** | **VB1** | **VB2** | **VB3** | **VB4** |
|---|---|---|---|---|---|---|---|
| | | | | EP'373 | EP'373 | EP'373 | EP'373 |
| | | | | B12 | B11 | B10 | B2 |
| HMDA | Mol-% | 63.0 | 74.8 | 0 | 0 | 15 | 0 |
| MACM | Mol-% | 37.0 | 25.2 | 100 | 100 | 85 | 100 |
| PACM | Mol-% | | | | | | |
| IPS | Mol-% | 31.0 | 37.2 | 50 | 100 | 90 | 0 |
| TPS | Mol-% | 31.0 | 37.2 | 50 | 0 | 10 | 0 |
| DDS | Mol-% | 38.0 | 25.6 | 0 | 0 | 0 | 100 |
| LC12 | Gew.-% | 0 | 0 | 24 | 34 | 0 | 0 |
| | | | | | | | |
| Zug-E-Modul | MPa | 2200 | 2500 | 2200 | 2300 | 3200 | 1580 |
| Reissfestigkeit | MPa | 72 | 64 | 61 | 60 | 85 | 60 |
| Reissdehnung | % | 149 | 132 | 52 | 60 | 16 | 150 |
| Tg | °C | 141 | 140 | 192 | 165 | 148 | 153 |
| Transparenz | % | > 90 | > 90 | > 90 | > 90 | > 90 | > 90 |
| Haze | % | <2 | <2 | <2 | <2 | <2 | <2 |
| Schlagzähigkeit | kJ/m² | oB | oB | oB | oB | 120 | oB |
| Kerbschlagzähigkeit | kJ/m² | 10 | 11 | 9 | 7 | 5 | 9 |
| ΔYI (6 Wochen, 60°C) | - | 1.6 | 1.9 | 5.0 | nb | nb | 2.7 |
| Kugelschusstest | - | (+) | (+) | (--) | nb | nb | (++) |

| | | | | | | | |
|---|---|---|---|---|---|---|---|
| HMDA: 1,6-Hexamethylendiamin; MACM: Bis-(4-amino-3-methyl-cyclohexyl)-methan; PACM: Bis-(4-amino-cyclohexyl)-methan; IPS: Isophthalsäure; TPS: Terephthalsäure; DDS: Dodecandisäure; LC12: Laurinlactam; oB: ohne Bruch; EP'373: Verweis auf das entsprechende Beispiel in der EP-A-1930373; nb: nicht bestimmt. | | | | | | | |

**Tabelle 2:**

| | | VB5a | VB5b | VB6 | VB7 |
|---|---|---|---|---|---|
| | | EP'930 | EP'930 | | EP'130 |
| | | VB-A | VB-A | | Bsp. 2 |
| HMDA | Mol-% | 95.4 | | 79.7 | 50 |
| MACM | Mol-% | 0 | | 15.1 | 0 |
| PACM | Mol-% | 4.6 | | 5.2 | 50 |
| IPS | Mol-% | 70 | | 50 | 80 |
| TPS | Mol-% | 30 | | 50 | 0 |
| DDS | Mol-% | 0 | | 0 | 20 |
| LC12 | Gew.-% | 0 | | 3.4 | 0 |
| VB-A | Gew.-% | | 80 | | 0 |
| PA66 | Gew.-% | | 20 | | 0 |
| | | | | | |
| Zug-E-Modul | MPa | 2780 | 2100 | 2800 | 2580 |
| Reissfestigkeit | MPa | 68 | 55 | 73 | 65 |
| Reissdehnung | % | 49 | 75 | 68 | 83 |
| Tg | °C | 128 | 106 | 160 | 163 |
| Transparenz | % | > 90 | 89 | > 90 | >90 |
| Haze | % | <2 | 3 | <2 | <2 |
| Schlagzähigkeit | kJ/m² | 110 | 100 | oB | oB |
| Kerbschlagzähigkeit | kJ/m² | 4 | 3 | 10 | 9 |
| ΔYI (6 Wochen, 60°C) | | nb | nb | 4.2 | nb |
| Kugelschusstest | - | (--) | nb | (--) | (--) |

| | | | | | |
|---|---|---|---|---|---|
| HMDA: 1,6-Hexamethylendiamin; MACM: Bis-(4-amino-3-methyl-cyclohexyl)-methan; PACM: Bis-(4-amino-cyclohexyl)-methan; IPS: Isophthalsäure; TPS: Terephthalsäure; DDS: Dodecandisäure; LC12: Laurinlactam; oB: ohne Bruch; EP'980: Verweis auf das Vergleichsbeispiel A (VB-A) in der EP-A-885930; PA66: Polyamid 66 aus 1,6 Hexamethylendiamin und Adipinsäure; nb: nicht bestimmt; EP '130: Verweis auf das Beispiel 2 auf Seite 10 in der EP-A-0041130. | | | | | |

### Methoden:

Die Glasumwandlungstemperatur oder Glasübergangstemperatur (T_{g}), wurde bestimmt nach ISO 11357-1/2. Die Differential Scanning Calorimetry (DSC) wurde mit einer Aufheizrate von 20 K/min durchgeführt.

Die relative Viskosität (ηᵣₑₗ) wurde gemäss DIN EN ISO 307:2013-08 anhand von 0,5 Gew.-%-igen m-Kresollösungen bei 20 °C gemessen. Als Probe wird Granulat verwendet. Zug-E-Modul, Reissfestigkeit und Reissdehnung wurden nach ISO 527 mit einer Zuggeschwindigkeit von 1mm/min (Zug-E-Modul) bzw. 50mm/min (Reissfestigkeit, Reissdehnung) am ISO-Zugstab, Norm: ISO/CD 3167, Typ Al, 170 × 20/10 × 4mm bei Temperatur 23°C bestimmt.

Schlagzähigkeit und Kerbschlagzähigkeit nach Charpy wurden nach ISO 179/keU am ISO-Prüfstab, Norm: ISO/CD 3167, Typ B1, 80 × 10 × 4mm bei einer Temperatur von 23°C gemessen.

Lichttransmission (Transparenz) und Haze wurden nach ASTM D 1003 an Platten der Dimension 2 × 60 × 60mm oder an Rundplatten 2 × 70mm bei einer Temperatur von 23°C mit dem Messgerät Haze Gard Plus der Firma Byk Gardner mit der CIE Lichtart C bestimmt. Die Lichttransmissionswerte werden in % der eingestrahlten Lichtmenge angegeben.

Veränderung des Yellow Index bei Lagerung:
Das wie oben beschrieben hergestellte Granulat wurde unmittelbar nach der Trocknung (ungelagerte Proben) zu Platten der Dimension 60x60x2 mm verspritzt. An diesen Platten wurde der Yellow-Index gemäss ASTM D1925 bestimmt. Dazu wurden jeweils 5 Platten vermessen und der arithmetische Mittelwert gebildet. Dieser an Platten aus ungelagertem Granulat bestimmte Yellow Index wurde als Ausgangswert verwendet. Daneben wurde das Granulat ab Trocknung in Beutel verpackt und für 6 Wochen in einem Trockenofen bei 60°C gelagert. Zur Lagerung wurden 35×53,5 cm grosse Beutel aus einem PET/Aluminium/PE-Laminat mit Schichtdicken von 12/9/100 µm, lösemittelfrei kaschiert mit 2-Komponentenkleber verwendet (Lieferant: Vacopack H. Buchegger AG, Schweiz). In den Beutel wurden 2 kg des Polyamidgranulats eingewogen. Die überstehende Restluft im Beutel wurde aus dem Beutel gepresst und der Beutel direkt oberhalb der Füllgrenze luftdicht verschweisst. Nach der Lagerung wurden die Säcke auf 23°C abgekühlt und geöffnet, das Polyamidgranulat zu 60x60x2 mm Platten verspritzt und der Yellow Index (ASTM D 1925) dieser Platten gemessen (Endwert; arithmetisches Mittel aus Messungen an 5 Platten). In den Tabellen angegeben ist die Differenz des Yellow Index (ΔYI) berechnet aus dem Yellow Index der Platten aus ungelagertem (Ausgangswert) und für sechs Wochen gelagertem Granulat (Endwert).

Kugelschusstest: Zur Bewertung der Duktilität wurde neben dem Zugversuch ein ballistischer Kugelschusstest durchgeführt. Der Test wurde an 60×60×2 mm Platten mit einem ULT^{™}-(II) Gerät der Firma SKILARK Machine Inc. durchgeführt. Hierfür wurden die Platten aus einer Entfernung von 580 ± 5 mm in einem Winkel von 90° mit einer Stahlkugel beschossen. Die 1 g schwere und im Durchmesser 6.3 mm grosse Stahlkugel wurde mit einem Druck von 2 bar senkrecht mittig auf die Platte geschossen. Der Test wurde an 5 Platten durchgeführt und die Platten nach der Prüfung unter folgenden Kriterien beurteilt: keine Risse, kein Bruch (++); Risse, kein Bruch (+); kein Bruch, grosse Risse (-); spröder Bruch, Splittern (--).

### Resultate:

Formteile aus den erfindungsgemässen Polymermischungen besitzen gute mechanische und thermische Eigenschaften. Die Transparenz (Transmission) und der Haze der erfindungsgemässen Formteile sind gut.

Wie insbesondere die Vergleichsbeispiele VB3 und VB7 zeigen, sind die Materialien nach dem Stand der Technik des allgemeinen Typs MACMI/6T und PACMI/612 zwar in der Lage, gute Werte für den Zug-E-Modul und eine gute Reissfestigkeit bereitzustellen, sie sind aber nicht in der Lage, eine gute Reissdehnung und gleichzeitig eine niedrige Bruchneigung im Kugelschusstest bereitzustellen. Wenn der Anteil an cycloaliphatischem Diamin 50 % oder mehr, bezogen auf die Diamin-Fraktion, ausmacht, wird die Bruchneigung zu gross und der Bruch ist nicht mehr duktil, sondern spröde. Das reine MACM12 auf der anderen Seite (vergleiche VB4) zeigt zwar eine gute Reissdehnung und eine geringe Bruchneigung im Kugelschusstest, aber ein ungenügendes-E-Modul. Werden Lactam-Bausteine eingesetzt (vergleiche VB2 und VB3 sowie VB6), so werden zwar gute Werte für das Zug-E-Modul sowie für die Reissfestigkeit erreicht, die Reisdehnung und die Bruchneigung im Kugelschusstest bleiben hingegen schlecht. Wird auf die Anwesenheit der Komponente (a4) verzichtet, vergleiche hierzu VB5a, so wird das gleiche beobachtet, Bruchdehnung und Bruchneigung bleiben ungenügend. Durch die Zugabe eines Schlagzähmodifikators (hier Polyamid 66), vergleiche hierzu VB5b, kann zwar die Reisdehnung etwas angehoben werden, es reduziert sich dann aber sofort die Reissfestigkeit und das Zug-E-Modul, und vor allem werden dann auch die optischen Werte schlecht (Transparenz und Haze).

## Patentansprüche

1. Polyamidformmasse bestehend aus den folgenden Bestandteilen:
(A) 50 - 100 Gew.-% mindestens eines transparenten Polyamids gebildet aus:
(a1) 55 bis 77 mol-% acyclisches, aliphatisches Diamin mit 5 bis 10 Kohlenstoffatomen;
(a2) 23 bis 45 mol-% cycloaliphatisches Diamin mit 6 bis 36 C-Atomen wobei die Anteile von (a1) und (a2) bezogen sind auf die Summe der eingesetzten Diamine und in der Summe 100 mol-% ausmachen;
(a3) 40 bis 80 mol-% aromatische Dicarbonsäure oder eine Mischung solcher Dicarbonsäuren;
(a4) 20 bis 60 mol-% acyclische, aliphatische Dicarbonsäure mit 8 bis 16 Kohlenstoffatomen oder eine Mischung solcher Dicarbonsäuren;
wobei die Anteile von (a3) und (a4) bezogen sind auf die Summe der eingesetzten Dicarbonsäuren und in der Summe 100 mol-% ausmachen,
wobei das transparente Polyamid frei von Lactamen oder den entsprechenden Aminocarbonsäuren ist;
(B) 0 - 50 Gew.-% Additive;
wobei die Summe der Komponenten (A) und (B) 100 Gew.-% ausmacht.

2. Polyamidformmasse nach Anspruch 1, **dadurch gekennzeichnet, dass** es sich beim Ausgangsstoff (a1) um ein lineares oder verzweigtes Diamin mit 6-10 Kohlenstoffatomen handelt, vorzugsweise um ein lineares Diamin mit 6-8 Kohlenstoffatomen, insbesondere bevorzugt um 1,6-Hexamethylendiamin und/oder 2-Methyl-1,5-Pentandiamin.

3. Polyamidformmasse nach einem der vorhergehenden Ansprüche, **dadurch gekennzeichnet, dass** es sich beim Ausgangsstoff (a2) um ein cycloaliphatisches Diamin mit 12-20 Kohlenstoffatomen handelt, vorzugsweise ausgewählt aus der Gruppe bestehend aus: Bis-(4-amino-3-methyl-cyclohexyl)-methan (MACM), Bis-(4-amino-cyclohexyl)-methan (PACM), 2,2-Bis-(4-amino-cyclohexyl)-propan (PACP), 2,2-Bis-(4-amino-3-methyl-cyclohexyl)-propan (MACP), Bis-(4-Amino-3-ethyl-cyclohexyl)-methan (EACM), 2,2-Bis-(4-amino-3-ethyl-cyclohexyl)-propan (EACP), Bis-(4-Amino-3,5-dimethy-cyclohexyl)-methan (TMACM), 2,2-Bis-(4-amino-3,5-dimethy-cyclohexyl)-propan (TMACP) oder Mischungen davon.

4. Polyamidformmasse nach einem der vorhergehenden Ansprüche, **dadurch gekennzeichnet, dass**
der Anteil an (a1) im Bereich von 58-75 mol-%, vorzugsweise im Bereich von 60-72 mol-% liegt,
und/oder dass der Anteil an (a2) im Bereich von 25-42 mol-%, vorzugsweise im Bereich von 28-40 mol-% liegt,
wobei die Anteile von (a1) und (a2) bezogen sind auf die Summe der eingesetzten Diamine und in der Summe 100 mol-% ausmachen
oder **dadurch gekennzeichnet, dass**
der Anteil an (a3) im Bereich von 40 - 78 mol-% oder 50-77 mol-%, vorzugsweise im Bereich von 60-75 mol-% liegt,
oder dass der Anteil an (a4) im Bereich von 22-60 mol-% oder 23-50 mol-%, vorzugsweise im Bereich von 25-40 mol-% liegt,
wobei die Anteile von (a3) und (a4) bezogen sind auf die Summe der eingesetzten Dicarboxylsäuren und in der Summe 100 mol-% ausmachen.

5. Polyamidformmasse nach einem der vorhergehenden Ansprüche, **dadurch gekennzeichnet, dass** es sich bei beim Ausgangsstoff (a3) um eine aromatische Dicarbonsäure mit 6-36 Kohlenstoffatomen handelt, vorzugsweise ausgewählt aus der Gruppe bestehend aus:
Terephthalsäure (TPS),
Naphthalindicarbonsäure (NDA), einschliesslich 1,5-Naphthalindicarbonsäure und 2,6-Naphthalindicarbonsäure,
Isophthalsäure (IPS),
Biphenyl-dicarbonsäure, einschliesslich Diphensäure (Biphenyl-2,2'-dicarbonsäure), 4,4'-Diphenyldicarbonsäure, 3,3'-Diphenyldicarbonsäure, 4,4'-Diphenyl-etherdicarbonsäure, 4,4'-Diphenylmethandicarbonsäure und 4,4'-Diphenylsulfondicarbonsäure,
1,5-Anthracendicarbonsäure,
p-Terphenylen-4,4"-dicarbonsäure und
2,5-Pyridindicarbonsäure
oder Mischungen davon, handelt.

6. Polyamidformmasse nach einem der vorhergehenden Ansprüche 5, **dadurch gekennzeichnet, dass** als aromatische Dicarbonsäure der Komponente (a3) eine Mischung aus Terephthalsäure und Isophthalsäure eingesetzt ist, vorzugsweise in einem molaren Verhältnis von 2:1-1:2, insbesondere in einem Verhältnis von 1.5:1-1:1.5, wobei insbesondere bevorzugt eine äquimolare Mischung aus Terephthalsäure und Isophthalsäure eingesetzt ist.

7. Polyamidformmasse nach einem der vorhergehenden Ansprüche, **dadurch gekennzeichnet, dass** es sich beim Ausgangsstoff (a4) um eine acyclische, lineare oder verzweigte aliphatische Dicarbonsäure mit 10-14 Kohlenstoffatomen oder eine Mischung solcher Dicarbonsäuren handelt, vorzugsweise um eine lineare aliphatischen Dicarbonsäure ausgewählt aus der folgenden Gruppe: Decandisäure, Undecandisäure, Dodecandisäure, Tridecandisäure, Tetradecandisäure, Hexadecandisäure oder eine Mischung davon, wobei insbesondere vorzugsweise als Ausgangsstoff (a4) ausschliesslich Dodecandisäure eingesetzt wird.

8. Polyamidformmasse nach einem der vorhergehenden Ansprüche, **dadurch gekennzeichnet, dass** der Anteil an Komponente (A) im Bereich von 60 bis 99.9 Gew.-%, bevorzugt im Bereich von 80 bis 99.5 Gew.-% und insbesondere bevorzugt in den Bereichen 90.0 bis 99.9 oder 97.0 bis 99.5 Gew.% liegt, jeweils bezogen auf die Formmasse aus (A) und (B),
oder dass der Anteil an Komponente (B) im Bereich von 0 - 50 Gew.-%, bevorzugt im Bereich von 0.1 - 40 Gew.-% und besonders bevorzugt im Bereich von 0.5 - 20 Gew.-% liegt, jeweils bezogen auf die Formmasse aus (A) und (B), wobei der Anteil an Komponente (B) bevorzugtermassen in Anteilen von höchstens 10 Gew.-%, bevorzugtermassen von höchstens als 5 Gew.-%, insbesondere bevorzugt von höchstens 3 Gew.-%. vorliegt, jeweils bezogen auf die Formmasse aus (A) und (B)..

9. Polyamidformmasse nach einem der vorhergehenden Ansprüche, **dadurch gekennzeichnet, dass**
(a1) ausgewählt ist als 1,6-Hexamethylendiamin;
(a2) ausgewählt ist als MACM, PACM, oder eine Mischung davon, vorzugsweise als ausschliesslich MACM;
(a3) ausgewählt ist als Terephthalsäure, Isophthalsäure, oder eine Mischung davon, vorzugsweise eine Mischung in einem Verhältnis von 1.5:1-1:1.5, insbesondere vorzugsweise eine äquimolare Mischung;
(a4) ausgewählt ist als Dodecandisäure,
wobei bevorzugtermassen die Anteile der Komponenten wie folgt ausgewählt sind: (a1) im Bereich von 60-75 mol-%; (a2) im Bereich von 25-40 mol-%; (a3) im Bereich von 60-75 mol-%; (a4) im Bereich von 25-40 mol-%;
wobei die Anteile von (a1) und (a2) bezogen sind auf die Summe der eingesetzten Diamine und in der Summe 100 mol-% ausmachen und wobei die Anteile von (a3) und (a4) bezogen sind auf die Summe der eingesetzten Dicarboxylsäuren und in der Summe 100 mol-% ausmachen.

10. Polyamidformmasse nach einem der vorhergehenden Ansprüche, **dadurch gekennzeichnet, dass** die Additive der Komponente (B) ausgewählt sind aus der Gruppe bestehend aus: von (A) verschiedene Polyamide; UV-Stabilisatoren; Hitzestabilisatoren; Radikalfänger; Verarbeitungshilfsstoffe; Einschlussverhinderer; Gleitmittel; Entformungshilfsstoffe, einschliesslich Metallstearate oder -montanate, wobei das Metall vorzugsweise ausgewählt ist aus der Gruppe bestehend aus Magnesium, Calcium, Barium, Mineralöle oder Fettsäureamide; Weichmacher; funktionelle Additive zur Beeinflussung der optischen Eigenschaften, insbesondere des Brechungsindexes; Schlagzähmodifikatoren; Füll- und/oder Zuschlagsstoffe; optische Aufheller; Farbstoffe oder Mischungen davon, wobei die Füll- und/oder Zuschlagstoffe bevorzugtermassen nanoskalig sind und/oder ausgewählt sind aus folgender Gruppe: Glasfasern, Glaskugeln, Carbonfasern, Russ, Graphit, Flammschutzmittel, Mineral einschliesslich Titandioxid, Calciumcarbonat oder Bariumsulfat.

11. Verfahren zur Herstellung einer Polyamidformmasse gemäss einem der Ansprüche 1 bis 10, **dadurch gekennzeichnet, dass** die Herstellung der Polymerkomponente (A) in Druckgefässen erfolgt, mit einer Druckphase bei 270°C bis 330°C mit einer nachfolgenden Entspannung bei 260°C bis 320°C, mit einer nachfolgenden Entgasung bei 260°C bis 320°C sowie Austragen der Polyamidformmasse in Strangform, Abkühlen, Granulieren und Trocknen des Granulats, Compoundieren der Komponente (A), und gegebenenfalls (B) als Granulat und Formen in einem Extruder bei Massetemperaturen von 250°C bis 350°C zu einem Strang, Schneiden mit geeigneten Granulatoren zu Pellets.

12. Formteil, erhältlich aus einer Polyamidformmasse gemäss einem der Ansprüche 1 bis 10 mittels Spritzgiessverfahren und/oder Spritzprägeverfahren bei Massetemperaturen von 230°C bis 320°C, wobei das Werkzeug mit Temperaturen von 40°C bis 130°C eingestellt wird und wobei gegebenenfalls das Werkzeug mit Temperaturen von 40°C bis 130°C nach dem Füllen der Kavität einen Prägedruck auf das heisse Formteil aufbringt.

13. Formteil gemäss Anspruch 12, **gekennzeichnet durch** eine hohe Lichttransmission, gemessen nach ASTM D1003, bestimmt an Platten mit einer Dimension 2 × 60 × 60mm oder an Rundplatten der Dimension 2 × 70mm, bei einer Temperatur von 23°C, mit dem Messgerät Haze Gard Plus der Firma Byk Gardner mit der CIE Lichtart C, wobei die Lichttransmission wenigstens 85%, bevorzugt wenigstens 88% und besonders bevorzugt wenigstens 90% beträgt
oder **gekennzeichnet durch** eine Trübung (Haze) gemessen nach ASTM D1003, einer aus der transparenten Polyamidformmasse nach den Ansprüchen 1 bis 10 hergestellten Platte mit einer Dicke von 2mm von höchstens 5%, bevorzugt von höchstens 3% und ganz besonders bevorzugt von höchstens 2%, aufweist.

14. Formteil gemäss Anspruch 12 oder 13, **gekennzeichnet durch** eine Reissdehnung, gemessen nach ISO 527 mit einer Zuggeschwindigkeit von 50 mm/min am ISO-Zugstab, Typ Al, 170 × 20/10 × 4mm, bei einer Temperatur von 23°C, von wenigstens 100 %, vorzugsweise von wenigstens 120 %, insbesondere vorzugsweise von wenigstens 130 %, vorzugsweise bei einem Zug-E-Modul gemessen nach ISO 527 mit einer Zuggeschwindigkeit von 1 mm/min am ISO-Zugstab, Typ Al, 170 × 20/10 × 4mm, bei einer Temperatur von 23°C, von mehr als 2000 MPa, vorzugsweise von mehr als 2100 MPa.

15. Formteil gemäss einem oder mehreren der vorhergehenden Ansprüche 12 -14, **dadurch gekennzeichnet, dass** es sich um ein Gehäuse- oder Displayelement oder ein Teilelement einer Maschine, eines Automobils, eines Haushaltsgerätes, eines Spielzeugs, eines Sportartikels oder eines insbesondere tragbaren elektrischen oder elektronischen Geräts, wie insbesondere eines Mobiltelefons, Computers, Laptops, GPS-Geräts, MP3-Players, Kamera, optischen Geräts oder Kombinationen davon handelt, oder um ein Brillengestell, ein Brillenglas, eine Linse, ein Fernglas, Schaugläser für Heizungstechnik mit direktem Ölkontakt, Filtertassen für Trinkwasseraufbereitung, Babyflaschen, Flaschen für Carbonisierung, Essgeschirr, Durchflussmesser für Gase oder flüssige Medien, Uhrengehäuse, Gehäuse für Armbanduhren, Lampengehäuse und Reflektoren für Autolampen oder Elemente davon.

## Claims

1. Polyamide moulding composition consisting of the following constituents:
(A) 50 to 100% by weight of at least one transparent polyamide composed of:
(a1) 55 to 77 mol% of acyclic, aliphatic diamine having 5 to 10 carbon atoms;
(a2) 23 to 45 mol% of cycloaliphatic diamine having 6 to 36 C atoms where the proportions of (a1) and (a2) are based on the entirety of the diamines used and give a total of 100 mol%;
(a3) 40 to 80 mol% of aromatic dicarboxylic acid or a mixture of such dicarboxylic acids;
(a4) 20 to 60 mol% of acyclic, aliphatic dicarboxylic acid having 8 to 16 carbon atoms, or a mixture of such dicarboxylic acids;
where the proportions of (a3) and (a4) are based on the entirety of the dicarboxylic acids used and give a total of 100 mol%
wherein the transparent polyamide is free from lactams or the corresponding amino acids;
(B) 0 - 50% by weight of additives;
where the entirety of components (A) and (B) gives 100% by weight.

2. Polyamide moulding composition according to Claim 1, **characterized in that** the starting material (a1) is a linear or branched diamine having 6-10 carbon atoms, preferably a linear diamine having 6-8 carbon atoms, with particular preference 1,6-hexamethylenediamine and/or 2-methyl-1,5-pentanediamine.

3. Polyamide composition according to any of the preceding claims, **characterized in that** the starting material (a2) is a cycloaliphatic diamine having from 12 to 20 carbon atoms, preferably selected from the group consisting of: bis(4-amino-3-methylcyclohexyl)methane (MACM), bis(4-aminocyclohexyl)methane (PACM), 2,2-bis(4-aminocyclohexyl)propane (PACP), 2,2-bis(4-amino-3-methylcyclohexyl)propane (MACP), bis(4-amino-3-ethylcyclohexyl)methane (EACM), 2,2-bis(4-amino-3-ethylcyclohexyl)propane (EACP), bis(4-amino-3,5-dimethylcyclohexyl)methane (TMACM), 2,2-bis(4-amino-3,5-dimethylcyclohexyl)propane (TMACP) or mixtures thereof.

4. Polyamide moulding composition according to any of the preceding claims, **characterized in that**
the proportion of (a1) is in the range 58-75 mol%, preferably in the range 60-72 mol%,
and/or that the proportion of (a2) is in the range 25-42 mol%, preferably in the range 28-40 mol%,
where the proportions of (a1) and (a2) are based on the entirety of the diamines used and give a total of 100 mol%,
or **characterized in that**
the proportion of (a3) is in the range 40 - 78 mol% or 50-77 mol%, preferably in the range 60-75 mol%,
or that the proportion of (a4) is in the range 22-60 mol% or 23-50 mol%, preferably in the range 25-40 mol%,
where the proportions of (a3) and (a4) are based on the entirety of the dicarboxylic acids used and give a total of 100 mol%.

5. Polyamide moulding composition according to any of the preceding claims, **characterized in that** the starting material (a3) is an aromatic dicarboxylic acid having 6-36 carbon atoms, preferably selected from the group consisting of:
terephthalic acid (TPA),
naphthalenedicarboxylic acid (NDA), inclusive of 1,5-naphthalenedicarboxylic acid and 2,6-naphthalenedicarboxylic acid,
isophthalic acid (IPA),
biphenyldicarboxylic acid, inclusive of diphenic acid (biphenyl-2,2'-dicarboxylic acid), diphenyl-4,4'-dicarboxylic acid, diphenyl-3,3'-dicarboxylic acid, diphenyl ether 4,4'-dicarboxylic acid, diphenylmethane-4,4'-dicarboxylic acid and diphenyl sulphone 4,4'-dicarboxylic acid,
anthracene-1,5-dicarboxylic acid,
p-terphenylene-4,4"-dicarboxylic acid and
pyridine-2,5-dicarboxylic acid
and mixtures thereof.

6. Polyamide moulding composition according to any of the preceding claims, **characterized in that** a mixture of terephthalic acid and isophthalic acid, preferably in a molar ratio of 2:1-1:2, in particular in a ratio of 1.5:1-1:1.5, is used as aromatic dicarboxylic acid of component (a3), where preference is in particular given to use of an equimolar mixture of terephthalic acid and isophthalic acid.

7. Polyamide moulding composition according to any of the preceding claims, **characterized in that** the starting material (a4) is an acyclic, linear or branched aliphatic dicarboxylic acid having 10-14 carbon atoms or a mixture of such dicarboxylic acids, preferably a linear aliphatic dicarboxylic acid selected from the following group: decanedioic acid, undecanedioic acid, dodecanedioic acid, tridecanedioic acid, tetradecanedioic acid, hexadecanedioic acid and mixtures thereof, where preference is in particular given to exclusive use of dodecanedioic acid as starting material (a4).

8. Polyamide moulding composition according to any of the preceding claims, **characterized in that** the proportion of component (A) is in the range 60 to 99.9% by weight, preferably in the range 80 to 99.5% by weight and with particular preference in the range 90.0 to 99.9 or 97.0 to 99.5% by weight, based in each case on the moulding composition made of (A) and (B),
or that the proportion of component (B) is in the range 0-50% by weight, preferably in the range 0.1-40% by weight and particularly preferably in the range 0.5-20% by weight, based in each case on the moulding composition made of (A) and (B), where component (B) is preferably present in proportions of at most 10% by weight, preferably of at most 5% by weight, with particular preference of at most 3% by weight, based in each case on the moulding composition made of (A) and (B).

9. Polyamide moulding composition according to any of the preceding claims, **characterized in that**
(a1) is selected to be 1,6-hexamethylenediamine;
(a2) is selected to be MACM, PACM, or a mixture thereof, preferably to be exclusively MACM;
(a3) is selected to be terephthalic acid, isophthalic acid, or a mixture thereof, preferably a mixture in a ratio of 1.5:1-1:1.5, with particular preference an equimolar mixture;
(a4) is selected to be dodecanedioic acid,
where the proportions of the components are preferably selected as follows: (a1) in the range 60-75 mol%; (a2) in the range 25-40 mol%; (a3) in the range 60-75 mol%; (a4) in the range 25-40 mol%;
where the proportions of (a1) and (a2) are based on the entirety of the diamines used and give a total of 100 mol%, and where the proportions of (a3) and (a4) are based on the entirety of the dicarboxylic acids used and give a total of 100 mol%.

10. Polyamide moulding composition according to any of the preceding claims, **characterized in that** the additives of component (B) are selected from the group consisting of: polyamides different from (A); UV stabilizers; heat stabilizers; free-radical scavengers, processing aids; inclusion preventers; lubricants; demoulding aids, inclusive of metal stearates and metal montanates, where the metal is preferably selected from the group consisting of magnesium, calcium, barium, mineral oils and fatty acid amides; plasticizers; functional additives for influencing optical properties, in particular refractive index; impact modifiers; fillers and/or aggregates; optical brighteners; dyes and mixtures thereof, where the fillers and/or aggregates are preferably nanoscale and/or selected from the following group: glass fibres, glass beads, carbon fibres, carbon black, graphite, flame retardants, mineral inclusive of titanium dioxide, calcium carbonate and barium sulphate.

11. Process for the production of a polyamide moulding composition according to any of Claims 1 to 10, **characterized in that** the production of polymer component (A) takes place in pressure vessels, with a pressure phase at 270°C to 330°C followed by depressurization at 260°C to 320°C, followed by devolatilization at 260°C to 320°C, and also discharge of the polyamide moulding composition in strand form, cooling, pelletization and drying of the pellets, compounding of component (A), and optionally (B), in the form of pellets and moulding in an extruder at melt temperatures of 250°C to 350°C to give a strand, and chopping by suitable pelletizers to give pellets.

12. Moulding, obtainable from a polyamide moulding composition according to any of Claims 1 to 10 by means of injection-moulding processes and/or injection-compression-moulding processes at melt temperatures of 230°C to 320°C, where the mould is adjusted to temperatures of 40°C to 130°C and where optionally the mould at temperatures of 40°C to 130°C after filling of the cavity applies compression to the hot moulding.

13. Moulding according to Claim 12, **characterized by** a light transmittance, measured in accordance with ASTM D1003, determined on plaques measuring 2 × 60 × 60mm or on discs measuring 2 × 70mm, at a temperature of 23°C, with haze-gard plus measurement equipment from the company Byk Gardner using CIE illuminant C, of at least 85%, preferably at least 88% and particularly preferably at least 90%, or **characterized by** haze measured in accordance with ASTM D1003 of at most 5%, preferably of at most 3% and very particularly preferably of at most 2%, of a plaque of thickness 2 mm produced from the transparent polyamide moulding composition according to Claims 1 to 10.

14. Moulding according to Claim 12 or 13, **characterized by** a tensile strain at break of at least 100%, preferably of at least 120%, with particular preference of at least 130%, measured in accordance with ISO 527 at a tensile testing velocity of 50 mm/min on an ISO tensile specimen of type Al, 170 × 20/10 × 4mm, at a temperature of 23°C, preferably with a tensile modulus of elasticity of more than 2000 MPa, preferably of more than 2100 MPa, measured in accordance with ISO 527 with a tensile testing velocity of 1 mm/min on an ISO tensile specimen of type Al, 170 × 20/10 × 4mm, at a temperature of 23°C.

15. Moulding according to one or more of the preceding Claims 12-14, **characterized in that** it is a housing element or display element or a component element of a machine, of an automobile, of a household device, of a toy, of a sports item or of an in particular portable electrical or electronic device, for example in particular of a mobile phone, computer, laptop, GPS device, MP3 player, camera, optical device or combination thereof, or is a spectacle frame, a spectacle lens or other lens, a binocular, a viewing window for heating systems with direct oil contact, a filter cup for drinking-water treatment, a feeding bottle, carbonization bottle, crockery, flow meter for gases or liquids, clock casing, watch casing, lamp housing or reflector for automobile lamps or element thereof.

## Revendications

1. Masse à mouler en polyamide constituée des composants suivants :
(A) 50 à 100 % en poids d'au moins un polyamide transparent formé de :
(a1) 55 à 77% en moles de diamine aliphatique acyclique avec 5 à 10 atomes de carbone ;
(a2) 23 à 45% en moles de diamine cycloaliphatique avec 6 à 36 atomes de carbone
les proportions de (a1) et (a2) se rapportant à la somme des diamines mises en oeuvre et représentant au total 100 % en moles ;
(a3) 40 à 80 % en moles d'acide dicarboxylique aromatique ou d'un mélange de tels acides dicarboxyliques ;
(a4) 20 à 60 % en moles d'acide dicarboxylique aliphatique acyclique ayant 8 à 16 atomes de carbone ou un mélange de tels acides dicarboxyliques ;
les proportions de (a3) et (a4) se rapportant à la somme des acides
dicarboxyliques utilisés et représentant au total 100 % en moles, le polyamide transparent étant exempt de lactames ou des acides aminocarboxyliques correspondants ;
(B) 0 à 50 % en poids d'additifs ;
la somme des composants (A) et (B) représentant 100 % en poids.

2. Masse à mouler en polyamide selon la revendication 1, **caractérisée en ce que** la matière de départ (a1) est une diamine linéaire ou ramifiée comportant 6-10 atomes de carbone, de préférence une diamine linéaire comportant 6-8 atomes de carbone, de préférence en particulier la 1,6-hexaméthylènediamine et/ou la 2-méthyl-1,5-pentanediamine.

3. Masse à mouler en polyamide selon l'une quelconque des revendications précédentes, **caractérisée en ce que** la matière première (a2) est une diamine cycloaliphatique comportant 12-20 atomes de carbone, de préférence choisie dans le groupe constitué par : Bis-(4-amino-3-méthyl-cyclohexyl)-méthane (MACM), Bis-(4-amino-cyclohexyl)-méthane (PACM), 2,2-bis-(4-amino-cyclohexyl)-propane (PACP), 2,2-bis-(4-amino-3-méthyl-cyclohexyl)-propane (MACP), le bis-(4-amino-3-éthyl-cyclohexyl)-méthane (EACM), le 2,2-bis-(4-amino-3-éthyl-cyclohexyl)-propane (EACP), le bis-(4-amino-3,5-diméthy-cyclohexyl)-méthane (TMACM), le 2,2-bis-(4-amino-3,5-diméthy-cyclohexyl)-propane (TMACP) ou leurs mélanges.

4. Masse à mouler en polyamide selon l'une des revendications précédentes, **caractérisée en ce que**
la proportion de (a1) se situe dans la plage de 58 à 75 % en moles, de préférence dans la plage de 60 à 72 % en moles,
et/ou **en ce que** la proportion de (a2) se situe dans la plage de 25 à 42 % en moles, de préférence dans la plage de 28 à 40 % en moles,
les proportions de (a1) et (a2) se rapportant à la somme des diamines utilisées et représentant au total 100 % en moles.
ou **caractérisé en ce que**
la proportion de (a3) se situe dans la plage de 40 à 78 % en moles ou de 50 à 77 % en moles, de préférence dans la plage de 60 à 75 % en moles,
ou que la proportion de (a4) se situe dans la plage de 22-60 % en moles ou de 23-50 % en moles, de préférence dans la plage de 25-40 % en moles,
les proportions de (a3) et (a4) se rapportant à la somme des acides dicarboxyliques mis en oeuvre et représentant au total 100 % en moles.

5. Masse à mouler en polyamide selon l'une des revendications précédentes, **caractérisée en ce que** la matière première (a3) est un acide dicarboxylique aromatique comportant 6 à 36 atomes de carbone, de préférence choisi dans le groupe constitué par :
acide téréphtalique (TPS),
acide naphtalènedicarboxylique (NDA), y compris l'acide 1,5-naphtalènedicarboxylique et l'acide 2,6-naphtalènedicarboxylique,
acide isophtalique (IPS),
acide biphényl-dicarboxylique, y compris l'acide diphénique (acide biphényl-2,2'-dicarboxylique), l'acide 4,4'-diphényldicarboxylique, l'acide 3,3'-diphényldicarboxylique, l'acide 4,4'-diphényl-étherdicarboxylique, l'acide 4,4'-diphénylméthanedicarboxylique et l'acide 4,4'-diphénylsulfonedicarboxylique, acide 1,5-anthracène-dicarboxylique,
acide p-terphénylène-4,4"-dicarboxylique et
acide 2,5-pyridine-dicarboxylique
ou des mélanges de ceux-ci.

6. Masse à mouler en polyamide selon l'une des revendications précédentes, **caractérisée en ce que** l'on utilise comme acide dicarboxylique aromatique du composant (a3) un mélange d'acide téréphtalique et d'acide isophtalique, de préférence dans un rapport molaire de 2:1-1:2, en particulier dans un rapport de 1,5:1-1,5, un mélange équimolaire d'acide téréphtalique et d'acide isophtalique étant notamment utilisé de préférence.

7. Masse à mouler polyamide selon l'une des revendications précédentes, **caractérisée en ce que** la matière première (a4) est un acide dicarboxylique aliphatique acyclique, linéaire ou ramifié, ayant de 10 à 14 atomes de carbone ou un mélange de tels acides dicarboxyliques, de préférence un acide dicarboxylique aliphatique linéaire choisi dans le groupe suivant Acide décanedioïque, acide undécanedioïque, acide dodécanedioïque, acide tridécanedioïque, acide tétradécanedioïque, acide hexadécanedioïque ou un mélange de ceux-ci, en utilisant notamment de préférence comme matière première (a4) exclusivement l'acide dodécanedioïque.

8. Masse à mouler en polyamide selon l'une des revendications précédentes, **caractérisée en ce que** la proportion de composant (A) se situe dans la plage de 60 à 99,9 % en poids, de préférence dans la plage de 80 à 99,5 % en poids et en particulier de préférence dans les plages de 90,0 à 99,9 ou de 97,0 à 99,5 % en poids, respectivement par rapport à la masse à mouler constituée de (A) et de (B), ou **en ce que** la proportion de composant (B) se situe dans la plage de 0 à 50 % en poids, de préférence dans la plage de 0,1 à 40 % en poids et de manière particulièrement préférée dans la plage de 0,5 à 20 % en poids, à chaque fois par rapport à la masse à mouler de (A) et (B),
la proportion de composant (B) étant présente de préférence dans des proportions d'au plus 10 % en poids, de préférence d'au plus 5 % en poids, de préférence d'au plus 3 % en poids, à chaque fois par rapport à la masse à mouler de (A) et (B).

9. Masse à mouler en polyamide selon l'une des revendications précédentes, **caractérisée en ce que**
(a1) est choisi parmi la 1,6-hexaméthylènediamine ;
(a2) est choisi comme MACM, PACM, ou un mélange de ceux-ci, de préférence comme MACM exclusivement ;
(a3) est choisi parmi l'acide téréphtalique, l'acide isophtalique, ou un mélange de ceux-ci, de préférence un mélange dans un rapport de 1,5:1-1:1,5, en particulier de préférence un mélange équimolaire ;
(a4) est choisi parmi l'acide dodécanedioïque,
de préférence, les proportions des composants étant choisies comme suit : (a1) dans la plage de 60-75% en moles ; (a2) dans la plage de 25-40% en moles ; (a3) dans la plage de 60-75% en moles ; (a4) dans la plage de 25-40% en moles ;
les proportions de (a1) et (a2) se rapportant à la somme des diamines mises en oeuvre et représentant au total 100 % en moles, et les proportions de (a3) et (a4) se rapportant à la somme des acides dicarboxyliques mis en oeuvre et représentant au total 100 % en moles.

10. Masse à mouler en polyamide selon l'une des revendications précédentes, **caractérisée en ce que** les additifs du composant (B) sont choisis dans le groupe constitué par : polyamides différents de (A) ; stabilisateurs UV ; stabilisateurs thermiques ; piégeurs de radicaux ; auxiliaires de mise en œuvre ; inhibiteurs d'inclusion ; lubrifiants ; auxiliaires de démoulage, y compris les stéarates ou montanates métalliques, le métal étant de préférence choisi dans le groupe constitué par le magnésium, le calcium, le baryum, les huiles minérales ou les amides d'acides gras ; plastifiants ; additifs fonctionnels pour influencer les propriétés optiques, en particulier l'indice de réfraction ; modificateurs de la résistance aux chocs ; charges et/ou additifs ; azurants optiques ; colorants ou leurs mélanges, les charges et/ou additifs étant de préférence de taille nanométrique et/ou étant choisis dans le groupe suivant : Fibres de verre, billes de verre, fibres de carbone, noir de carbone, graphite, agents ignifuges, minéraux, y compris le dioxyde de titane, le carbonate de calcium ou le sulfate de baryum.

11. Procédé de préparation d'une masse à mouler en polyamide selon l'une des revendications 1 à 10, **caractérisé en ce que** la préparation du composant polymère (A) a lieu dans des récipients sous pression, avec une phase de pression à 270°C à 330°C suivie d'une détente à 260°C à 320°C, avec un dégazage consécutif entre 260°C et 320°C ainsi que l'évacuation de la masse à mouler en polyamide sous forme de boudin, le refroidissement, la granulation et le séchage du granulat, le compoundage du composant (A), et éventuellement (B) sous forme de granulat et le moulage dans une extrudeuse à des températures de masse de 250°C à 350°C en un boudin, le découpage avec des granulateurs appropriés en pellets.

12. Pièce moulée, obtenue à partir d'une masse à mouler en polyamide selon l'une des revendications 1 à 10 au moyen d'un procédé de moulage par injection et/ou d'un procédé de moulage par injection à des températures de masse de 230°C à 320°C, le moule étant réglé à des températures de 40°C à 130°C et, le cas échéant, le moule étant réglé à des températures de 40°C à 130°C après le remplissage de la cavité, appliquant une pression de gaufrage sur la pièce moulée chaude.

13. Pièce moulée selon la revendication 12, **caractérisée par** une transmission lumineuse élevée, mesurée selon ASTM D1003, déterminée sur des plaques de dimension 2 × 60 × 60mm ou sur des plaques rondes de dimension 2 × 70mm, à une température de 23°C, avec l'appareil de mesure Haze Gard Plus de la société Byk Gardner avec l'illuminant CIE, la transmission lumineuse étant d'au moins 85%, de préférence d'au moins 88% et de manière particulièrement préférée d'au moins 90%. ou **caractérisé par** un voile (Haze) mesuré selon ASTM D1003, d'une plaque d'une épaisseur de 2 mm fabriquée à partir de la masse à mouler en polyamide transparente selon les revendications 1 à 10, d'au plus 5%, de préférence d'au plus 3% et tout particulièrement d'au plus 2%.

14. Pièce moulée selon la revendication 12 ou 13, **caractérisée par** un allongement à la rupture, mesuré selon ISO 527 à une vitesse de traction de 50 mm/min sur la barre de traction ISO, type Al, 170 × 20/10 × 4mm, à une température de 23°C, d'au moins 100%, de préférence d'au moins 120%, de préférence d'au moins 130 %, de préférence à un module d'élasticité en traction mesuré selon ISO 527 à une vitesse de traction de 1 mm/min sur la barre de traction ISO, type Al, 170 × 20/10 × 4mm, à une température de 23°C, de plus de 2000 MPa, de préférence de plus de 2100 MPa.

15. Pièce moulée selon une ou plusieurs des revendications précédentes 12-14, **caractérisée en ce qu'**il s'agit d'un élément de boîtier ou d'écran ou d'un élément partiel d'une machine, d'une automobile, d'un appareil électroménager, d'un jouet, d'un article de sport ou d'un appareil électrique ou électronique, en particulier portable, tel que notamment un téléphone mobile, un ordinateur, un ordinateur portable, un appareil GPS, un lecteur MP3, un appareil photo, d'un appareil optique ou d'une combinaison de ceux-ci, ou d'une monture de lunettes, de verres de lunettes, de lentilles, de jumelles, de hublots de chauffage à contact direct avec l'huile, de tasses à filtre pour le traitement de l'eau potable, de biberons, de bouteilles de carbonisation, de vaisselle, de débitmètres pour gaz ou liquides, de boîtes de montres, de boîtiers de montres-bracelets, de boîtiers de lampes et de réflecteurs pour lampes de voiture ou d'éléments de ceux-ci
